# EUROPEAN PATENT APPLICATION

(11) **EP 4 456 382 A1**
(43) Date of publication of application: **30.10.2024**
(21) Application number: 23170145.9
(22) Date of filing: 26.04.2023
(51) Int. Cl.: H02K 3/22, H02K 9/19, H02K 3/12, H02K 3/24

(54) **A STATOR HAVING A HAIRPIN WINDING ARRANGEMENT**

(71) Applicant: Polestar Performance AB, 405 31 Göteborg (SE)
(72) Inventor: EHN, Joakim, 461 98 Trollhättan (SE); PERSSON, Tony, 416 52 Göteborg (SE)
(74) Representative: Zacco Sweden AB

(57) **Abstract**

The present disclosure relates to a stator (1) for an electric motor of an electric vehicle, the stator (1) comprising an annular stator core (2) comprising an inner circumferential surface (3) having circumferentially distributed slots (4) formed in said inner circumferential surface (3). Further, comprising a hairpin winding arrangement (5) comprising a plurality of hollow hairpin conductors (6), each hollow hairpin conductor (6). Each slot (4) accommodates portions of a plurality of hollow hairpin conductors (6), the plurality of slots (4) comprising fluid inlet slots (4a) and fluid outlet slots (4b), wherein the fluid inlet slots (4a) accommodates a plurality of first portions (6a) and the fluid outlet slots (4b) accommodates a plurality of second portions (6b) such that each hairpin (6) is accommodated by two slots (4a, 4b). Furthermore, each inlet (6i) of each hollow hairpin conductor (6) is arranged to receive cooling medium from a cooling device (20).

## Description

### TECHNICAL FIELD

The present disclosure relates to a stator having a hairpin winding arrangement with conductors being arranged to receive cooling medium. Further, the disclosure relates to an electric motor comprising such a stator, a separation structure and an electric vehicle.

### BACKGROUND

An electric motor of an electric vehicle generates heat during its operation which can lead to the deterioration of its components and reduced efficiency of the electric motor. As the motor operates, the flow of electric current through the windings of its stator causes the generation of heat. If this heat is not dissipated, it can cause the motor to overheat.

To dissipate the heat, cooling medium such as oil is introduced in the motor to cool the stator winding and maintain the motor's temperature within safe operating limits.

Conventionally, stator winding cooling solutions used in the present art fail to efficiently cool the winding. Commonly, the cooling medium is often distributed by spraying the end-windings with a cooling medium. Then, the cooling medium reaches the electric motor housing and the air gap between the rotor and the stator. This leads to higher rotor drag losses. Also, such a cooling method fails to evenly distribute the cooling medium resulting in uneven heat transfer.

Thus, stators and electric motors in the present art can be improved so to allow for a more efficient cooling of the stator winding.

Accordingly, there is room for stators in the present art to explore the domain of providing a stator, an electric motor and a structure that is adapted to, when receiving cooling medium, cool the windings more efficiently.

Even though previous solutions may work well in some situations, it would be desirable to provide a stator, an electric motor and a structure that provide/facilitate a more efficient cooling of the stator windings.

### SUMMARY

It is therefore an object of the present disclosure to alleviate at least some of the mentioned drawbacks to provide an improved stator, electric motor and separation structure that facilitates more efficient cooling of the stator winding.

This and other objects, which will become apparent in the following, are achieved by a stator, an electric motor and a separation structure as defined in the appended claims.

The present disclosure relates to a stator for an electric motor of an electric vehicle, the stator comprising an annular stator core comprising an inner circumferential surface, wherein a plurality of circumferentially distributed slots (distributed within a circular perimeter) are formed in said inner circumferential surface. Further, the stator comprises a hairpin winding arrangement, the hairpin winding arrangement comprising a plurality of hollow hairpin conductors, each hollow hairpin conductor extending from a first portion to a second portion thereof. The first and second portions may be separated by a bridging portion.

Each first portion comprising an inlet and each second portion comprising an outlet, each slot accommodates portions of a plurality of hollow hairpin conductors, the plurality of slots comprising fluid inlet slots and fluid outlet slots (e.g. dividedly being inlet slots or outlet slots). The fluid inlet slots accommodates/at least partially encloses a plurality of first portions and the fluid outlet slots accommodates a plurality of second portions such that each hairpin is accommodated by two slots (one being fluid inlet slot and the other being a fluid outlet slot). Each inlet of each hollow hairpin conductor is arranged to receive cooling medium from a cooling device, thereby allowing the cooling medium to circulate inside each hollow conductor from said inlet to said outlet thereof.

An advantage of the stator according to the present disclosure is that the hollow hairpin conductors can be directly cooled as the cooling medium can be inputted into the interior of each hairpin.

Further, in some aspects herein, the annular stator core comprise a first and a second opposing base surface, wherein each inlet and outlet protrudes out (away from the base) of, or is accessible from, a common base surface of the first and the second base surface. Accordingly, all inlets and outlets may be protruding from one common side of said stator. This allows for the cooling device supplying the cooling medium to be more compact as it only needs to be connected to one side of the stator.

Further, the stator may comprise a separation structure attached/associated to said common base surface that the inlets and outlets protrudes out of, or is accessible from, wherein the separation structure comprises a barrier isolating the inlets from the outlets within the separation structure.

An advantage of the separation structure is that it can separate the inlets from the outlets so that the cooling medium that is inputted in the inlets will not be mixed with the cooling medium outputted from the outlets.

The barrier of the separation structure may be a meandering barrier, the meandering barrier dividing an inner space enclosed by the separation structure into an inlet chamber and an outlet chamber. The inlet chamber may comprise a cooling medium receiving opening arranged to receive cooling medium from said cooling device, preferably the outlet chamber comprises a cooling outlet opening arranged to output cooling medium. The output may be connected to, or lead to a sump for receiving said outputted cooling medium. The term "meandering" also encompass a zigzag form.

An advantage of having a separation structure in the form of a meandering barrier is that it allows for periodic distribution of fluid inlet and fluid outlet slots. For example, such that every other slot of said circumferentially distributed slots are the fluid inlet slots such that remaining slots are fluid outlet slots or such that two fluid inlet slots are adjacent each other followed by two fluid outlet slots etc. Accordingly, the meandering form allows for a distribution of the first and second portions of the conductors that allows for more even cooling of the stator and conductors of the stator. Further, the meandering barrier allow for a space-efficient dividing of a common space into two parts, one part to be exclusively utilized by inlets and the other parts by outlets. Thus, it eliminates the need of providing a complex structure for separating the inlets from the outlets.

The barrier extends in a direction away from the stator i.e. in an axial direction. The barrier may comprise a first and an opposing second barrier surface, the first surface being exposed to inlets and the second surface being exposed to outlets of said conductors. The barrier may form a meandering perimeter.

In some aspects, the separation structure comprises an annular cylinder having an inner cylindrical body and an outer cylindrical body coaxially arranged with respect to the inner cylindrical body. The structure may further comprise at least a first cylinder base adjoining first edges of said inner and outer body (forming a lid). Further, the barrier may be formed intermediate the inner and outer cylindrical body. Accordingly, the inner and outer bodies may have a corresponding height as the barrier. The inner cylindrical body may have a radius so that a rotor can be inserted in the stator when said separation structure is attached to the stator. Thus, the separation structure can be already attached/installed to the stator when a rotor is being inserted in the stator for being accommodated by the stator for forming an electric motor.

The separation structure may comprise a second cylinder base adjoining second edges of said inner and outer cylindrical bodies, the second cylinder base being arranged to attach to said common base surface or inlets and outlets protruding out from said common base surface. The second cylinder base comprising hairpin openings arranged to allow cooling medium to be transferred from an inlet chamber to an outlet chamber of the separation structure, by means of (interiors of) said hairpin conductors. The hairpin openings may be arranged to connect to the hairpins so that no cooling medium can leak from the openings e.g. by press fit or by sealing. Accordingly, the hairpin inlets/outlets may be arranged to protrude into said opening so that they are within said inlet and outlet chambers.

An advantage of this is that the separation structure need not to be directly connected to the stator but can instead be connected to the winding inlets/outlets (end portions).

The separation structure may be integrally formed. Accordingly, being more convenient to manufacture and to install.

Further, each hairpin conductor may comprise a bridging portion intermediate said first portion and said second portion, the bridging portion bridging the hairpin between said two slots. Thus, the length of a hairpin conductor may be extend from a first portion, to a bridging portion to a second portion.

The fluid inlet slots and fluid outlet slots may constructional be the same. However, the fluid inlet slots may refer to that the slots accommodate first portion and the fluid outlet slots accommodating second portions.

There is further disclosed a separation structure for attachment to the stator according to any aspect herein, wherein the separation structure comprises a barrier fluidically isolating the inlets from the outlets within the separation structure. The separation structure may comprise the same structural components as the separation structure of the stator herein.

The barrier of the separation structure may be a meandering barrier, the meandering barrier dividing an inner space enclosed by the separation structure into an inlet chamber and an outlet chamber, the inlet chamber comprising a cooling medium receiving opening allowing for cooling medium to be injected into said inlet chamber and be transferred, by said conductors, to said outlet chamber.

The separation structure may be formed by any suitable material such as a substrate or composite (e.g. plastic or any other suitable material).

There is also provided an electric motor comprising the stator according to any one of the aspects herein. Further the motor comprise a rotor accommodated by the stator. The rotor may be any suitable type of rotor such as an electrically excited rotor or a rotor having permanent magnets.

Moreover, there is provided an electric vehicle comprising the electric motor of any aspect herein.

Generally, all terms used in the description are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### BRIEF DESCRIPTION OF THE DRAWINGS

These and other features and advantages of the present disclosure will now be further clarified and described in more detail, with reference to the appended drawings;
- Figure 1: illustrates an objective view of a stator in accordance with some aspects of the present disclosure;
- Figure 2: illustrates a front view of a stator in accordance with some aspects of the present disclosure;
- Figure 3A: illustrates a side view of a stator in accordance with some aspects of the present disclosure;
- Figure 3B: illustrates an objective view of a hollow hairpin conductor in accordance with some aspects of the present disclosure;
- Figure 4: illustrates an objective back view of a stator in accordance with some aspects of the present disclosure;
- Figure 5: illustrates a cross-sectional side view of a stator in accordance with some aspects of the present disclosure;
- Figure 6: illustrates an objective view of a separation structure in accordance with some aspects of the present disclosure;
- Figure 7A: illustrates a front view of a stator in accordance with some aspects of the present disclosure;
- Figure 7B: illustrates a front view of an electric motor in accordance with some aspects of the present disclosure; and
- Figure 7C: illustrates schematically a side view of a vehicle in accordance with some aspects of the present disclosure.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

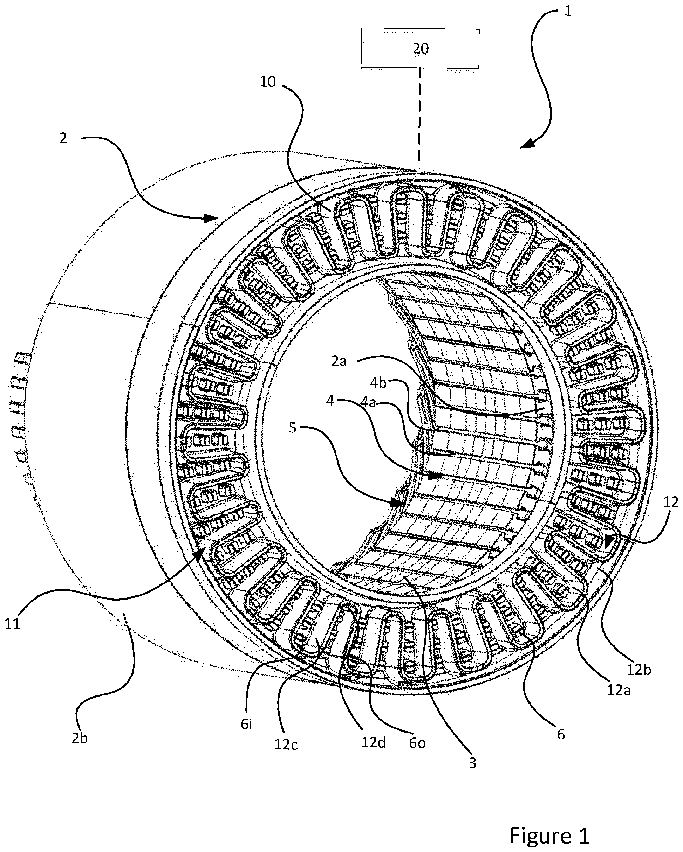

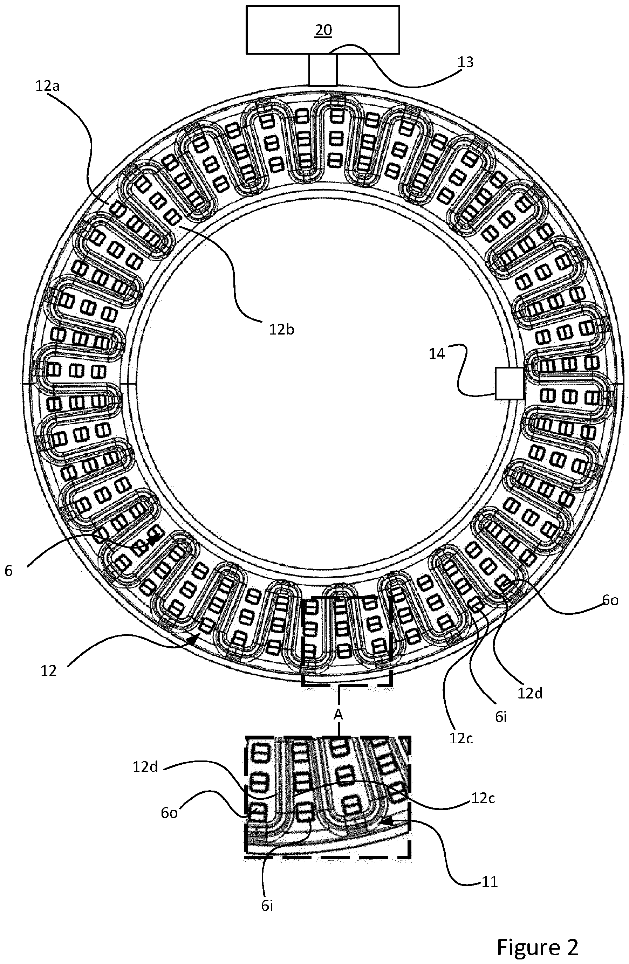

Figure 1 illustrates an objective view of a stator 1 for an electric motor of an electric vehicle. The stator 1 may be a 3-phase stator arranged to receive 3-phase AC current to create a rotary magnetic field arranged to interact with a permanent magnetic field of a rotor so to allow the rotor to rotate relative the stationary stator. The stator 1 may be connected to an inverter and other power electronics which in turn draws power from battery modules of the electric vehicle. The stator 1 of Figure 1 comprises an annular stator core 2 comprising an inner circumferential surface 3. The surface comprising a plurality of circumferentially distributed slots 4 formed in said inner circumferential surface 3. Further, the stator comprises a hairpin winding arrangement 5, the hairpin winding arrangement 5 comprising a plurality of hollow hairpin conductors 6, each hollow hairpin conductor 6 extending from a first portion to a second portion (see Figure 2) thereof, each first portion comprising an inlet (6i) and each second portion comprising an outlet (6o). Further, Figure 1 illustrates that each slot 4 accommodates portions of a plurality of hollow hairpin conductors 6. The plurality of slots 4 comprising fluid inlet slots and fluid outlet slots 4b, wherein the fluid inlet slots 4a accommodates a plurality of first portions 6a and the fluid outlet slots 4b accommodates a plurality of second portions 6b such that each hairpin 6 is accommodated by two slots 4a, 4b.

Figure 1 further illustrates that each inlet 6i of each hollow hairpin conductor 6 is arranged to receive cooling medium from a cooling device 20 (which is schematically depicted in Figure 1), thereby allowing the cooling medium to circulate inside each hollow conductor 6 from said inlet 6i to said outlet 6o thereof. The cooling device 20 may comprise a cooling nozzle, and a pump for supplying cooling medium (e.g. oil) to said inlets 6i. The cooling device may supply the inlets with a pre-determined flow so to allow for the cooling medium to flow from the inlets 6i to the outlets 6o.

Figure 1 further illustrates that the annular stator core (2) comprise a first and a second opposing base surface 2a, 2b, wherein each inlet 6i and outlet 6o protrudes out of, or is accessible from, a common base surface 2a of the first and the second base surface 2a, 2b. Accordingly, in Figure 1, the common base surface 2a is the surface denoted 2a. The height of the stator may be defined by the distance between said base surfaces 2a, 2b. The base surfaces 2a, 2b are in Figure 1 formed as circles with an opening for accommodating a rotor. The slots 4 extend from the first base surface 2a to the second 2b along the height of the stator 1 such that each slot 4 extends along the full height of the stator axially. Thus, the conductors 6 may protrude out of base surfaces 2a, 2b of the stator 1.

Figure 1 further illustrates, that in some aspects, the stator 1 may comprise a separation structure 10 attached to said common base surface 2a that the inlets and outlets 6i, 6o protrudes out of, or is accessible from (i.e. surface denoted 2a in Figure 1), wherein the separation structure 10 comprises a barrier 11 isolating the inlets 6i from the outlets 6o within the separation structure 10. In Figure 1 the separation structure 10 is directly attached to said inlets and outlets 6i, 6o.

Figure 2 illustrates a front view of a stator 1. Further, Figure 2 illustrates a cut-out enlarged view A of a part of the stator 1.

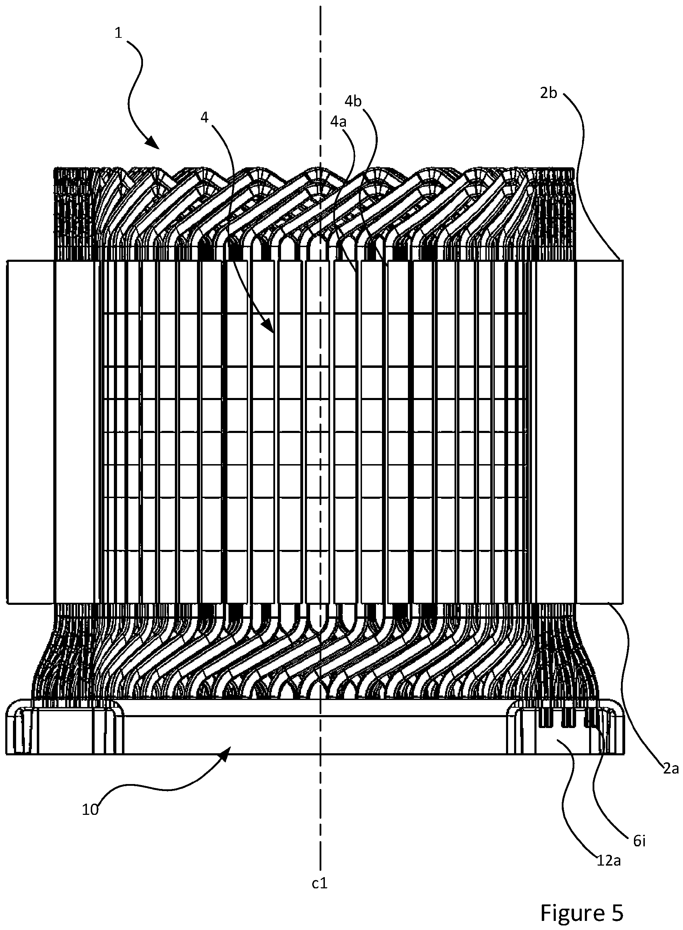

Figure 2 illustrates that the barrier 11 of the separation structure 10 can be a meandering barrier, the meandering barrier dividing an inner space 12 enclosed by the separation structure 10 into an inlet chamber 12a and an outlet chamber 12b (also depicted in e.g. Figure 5). The inlet and outlet chambers 12a, 12b may be fluidically isolated from each other, so that no cooling medium in the inlet chamber 12a can reach any cooling medium in the outlet chamber 12b without transferring through the conductors 6..

Figure 2 illustrates the inlet chamber 12a comprises a cooling medium receiving opening 13 arranged to receive cooling medium from said cooling device 20, preferably the outlet chamber 12b comprises a cooling outlet opening 14 arranged to output cooling medium. The enlarged view illustrates that the barrier comprises a first and an opposing second barrier surface 12c, 12d, the first surface 12c being exposed to inlets 6i and the second surface 12d being exposed to outlets 6o of said conductors 6. Hence, e.g., the first surface 12c, faces the inlets 6i. Figure 2 illustrates that six conductors 6 protrudes out of each slot forming a row i.e. the conductors 6 are stacked radially in each slot so that each row extends towards the stator center. Ends of the conductors 6 are welded so that the conductors 6 form three welded pairs. However, the conductors are not limited to such welding nor such a configuration. The pairing of the conductors 6 are dependent on the electric configuration of the winding of the stator 1 so it may be varied.

Further, Figure 2 illustrates that the barrier 11 divides the chambers 12a, 12b such that every other slot is within chamber 12a and the other within chamber 12b. Accordingly, in Figure 2, every other slot has inlets 6i and every other slots has outlets 6o. Accordingly, enlarged view A shows adjacent rows (coming out of adjacent slots), conductors of each row being either inlets or outlets 6o, 6i.

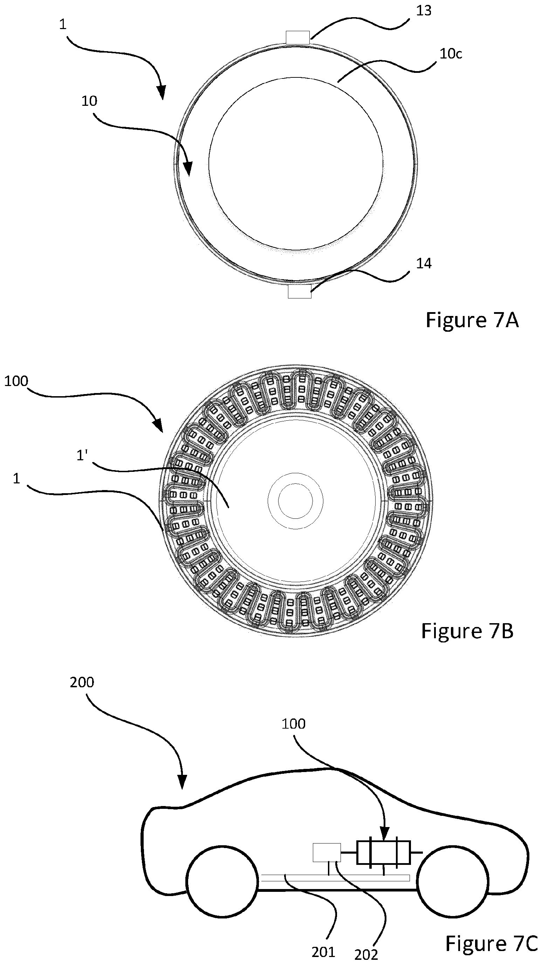

It should be noted that even if neither of Figure 1 and 2 illustrate a cover/lid covering the top of the separation structure 10. The separation structure 10 comprises such a lid as evident by the wording of the description of the structure and its elements (the lid 10c is further shown in Figure 7a). Specifically, the term "chamber" may refer to an enclosed space. Accordingly, one the cooling medium has entered the chamber 12 from an inlet 12 supplied by a cooling device 20, the cooling medium may only be transferred by the inlets 6i to the outlets 6o. Subsequently, the cooling medium may be outputted from said chamber 12b by an outlet 14. It should be noted that the separation structure 10 may comprise a plurality of inlets 13 and outlets 14. The outlet 14 may be connected to a cooling medium sump, .e.g., by means of a channel.

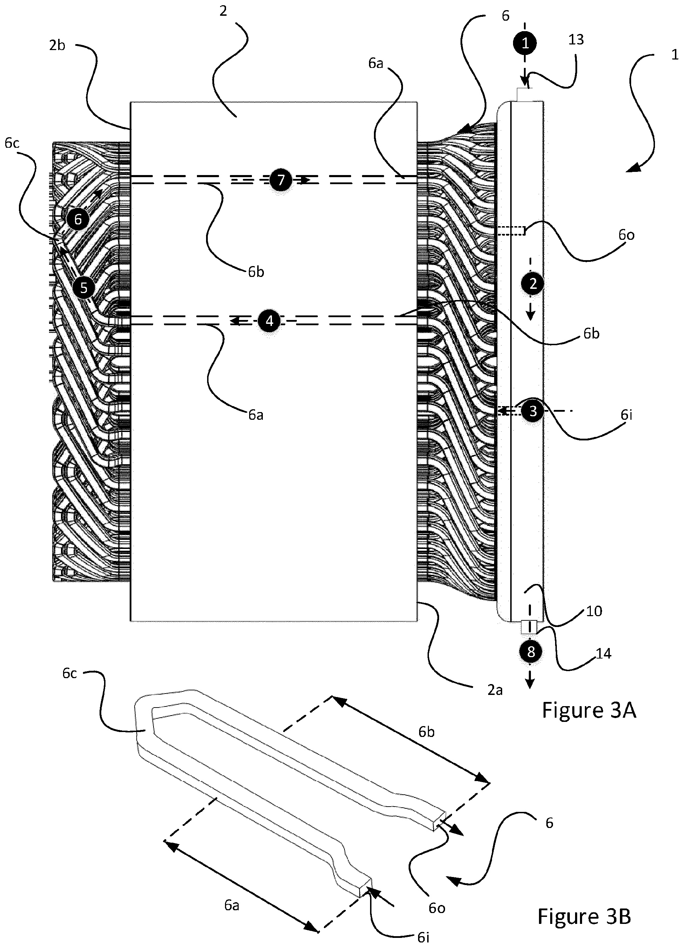

Figure 3A illustrates a side view of a stator according to some aspects herein. Figure 3A illustrates schematically by numbers 1-8 a path of the cooling medium that may be inputted by a cooling device 20 (e.g. the one shown in Figure 2).

Accordingly, Figure 3A illustrates that the cooling medium may enter from an inlet 13 into the separation structure 10. The cooling medium is then by the flow inputted to said inlets 6i of each of the conductors 6 (only one is shown in Figure 3 for illustrative purposes). Further, the cooling medium may be transferred from the inlet 6i along the length of the conductor 6 (see numbers 4-7) and outputted from the outlet 6o of each conductor 6 (only one outlet shown for illustrative purposes). Then the cooling medium can be outputted from an outlet 14 of the separation structure 10 into e.g., a sump or a channel. It is further evident from Figure 3A that the first and second portions 6a, 6b are enclosed by different slots as they are located on different circumferential locations (see numbers 4 and 7 of the flowpath which illustrates this). Specifically, the first and second portions 6a, 6b of each conductor 6 of the stator 1 in Figure 3A are spaced by six slots.

Figure 3A also illustrates that all inlets and outlets 6i, 6o protrude from a common surface 2a and that the separation structure 10 may be directly attached to said conductors 6 (e.g. by welding, adhesive, pressfit or any other suitable attachment means).

Figure 3B illustrates a single hairpin conductor 6 in an objective view. As illustrated in Figure 3B, each hairpin conductor comprises a first portion 6a, a bridging portion 6c (also seen in Figure 3A) and a second portion 6b. Accordingly, a plurality of first portions 6a or second portions 6b may protrude out of each slot.

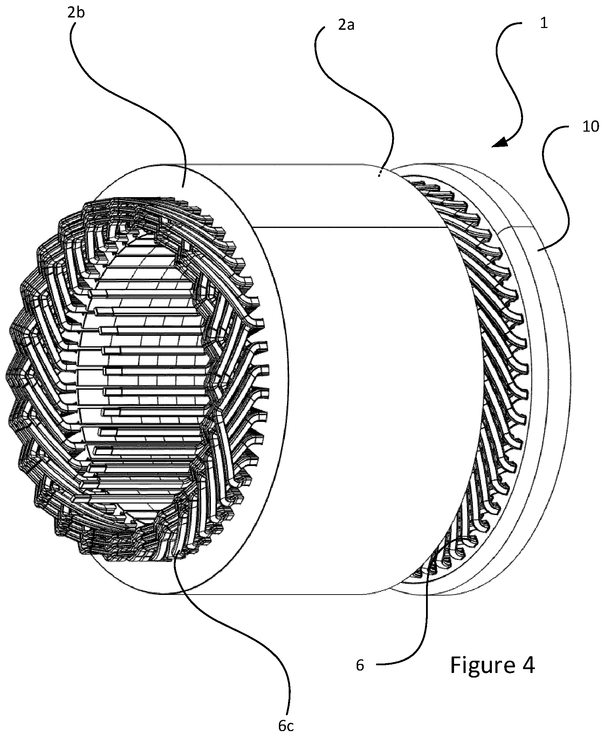

Figure 4 illustrates an objective back view of a stator 1. Specifically, Figure 4 illustrates the separation structure 10 attached to the conductors 6. Further, it is shown that the separation structure has a distance from the stator 1. Moreover, the bridging portions 6c all protrude out of the opposing surface 2b. Hence, all inlets and outlets therefore protrude out from the surface 2a.

Figure 5 illustrates a cross sectional side view of the stator 1 in accordance with some aspects herein. Figure 5 illustrates the circumferential distribution of slots 4. Each slot 4 extending axially along a center axis c1 of said stator 1. Further, Figure 5 illustrates inlets 6i from a slot 4 protruding into an inlet chamber 12a of said structure 10.

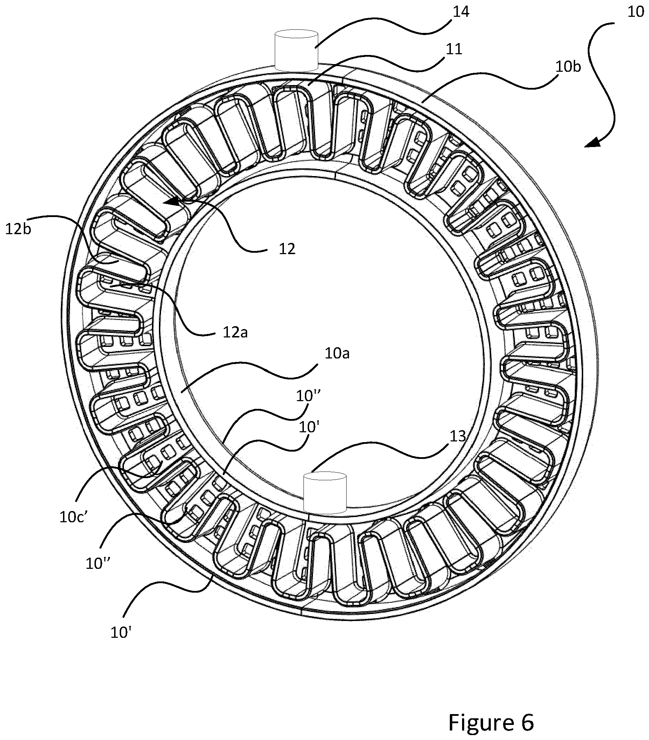

Figure 6 illustrates an objective view of separation structure 10. The separation structure may be the separation structure 10 attached to the stator 1 in figures 1-5 or a separation structure 10 for being attached to a stator 1.

As illustrated in Figure 6 the separation structure comprises a barrier for (fluidically) isolating inlets 6i from the outlets 6o (shown in e.g. Figure 1) within the separation structure 10. The barrier 11 of the separation structure 10 may be a meandering barrier dividing an inner space 12 enclosed by the separation structure 10 into an inlet chamber and an outlet chamber 12a, 12b, the inlet chamber 12a comprising a cooling medium receiving opening 13 allowing for cooling medium to be injected into said inlet chamber 12a and be transferred, by said conductors 6, to said outlet chamber 12b. Further, the outlet chamber 12b comprises cooling outlet opening 14 for outputting cooling medium that has circulated from inlets to outlets and into the outlet chamber 12b.

Figure 6 specifically illustrates that the separation structure 10 may comprise an annular cylinder having an inner cylindrical body 10a and an outer cylindrical body 10b coaxial with the inner cylindrical body 10a. Further, the separation structure 10 comprises at least a first cylinder base 10c (shown in Figure 7a) adjoining first edges 10' of said inner and outer body.

Figure 6 further illustrates that the barrier 11 may be formed intermediate the inner and outer cylindrical body 10a, 10b.

Further, Figure 6 illustrates that the separation structure 10 may comprise a second cylinder base 10c' adjoining second edges 10'' of said inner and outer cylindrical bodies 10a, 10b. The second edges 10" being opposing the first edges 10' the second cylinder base 10c' being arranged to attach to said common base surface 2a (shown in Figure 1) or inlets and outlets protruding out from said common base surface 2c. Figure 6 further illustrates that the second cylinder base 10c' may comprise hairpin openings arranged to allow cooling medium to be transferred from an inlet chamber to an outlet chamber 12a, 12b of the separation structure 10, by means of said hairpin conductors (which are not illustrated in Figure 6).

Figure 7A illustrates a stator 1 comprising the separation structure 10 in accordance with some aspects herein from a front view. Figure 7A illustrates the cylinder base 10c/lid adjoining edges of the separation structure.

Figure 7B illustrates an electric motor 100 from a front view in accordance with aspects herein, the electric motor 100 comprising a stator 1 and a rotor 1' accommodated by the stator.

Figure 7C illustrates an electric vehicle 200 comprising an electric motor 100 in accordance with some aspects herein. The electric vehicle 200 of Figure 7C is illustrated from a schematical side view. The electric vehicle 200 comprises a battery module 201 a number of other electrical components, including an electrical current transmission system, safety system, battery management system, current management system, and a battery busbar interconnecting the various components. Further, the electric vehicle 200 may comprise an electronic control unit (ECU) 202 in order to control the electric motor 100 or cooling thereof. The ECU 202 or components thereof can comprise or include various modules, each of which is constructed, programmed, configured, or otherwise adapted to autonomously carry out a function or set of functions.

## Claims

1. A stator (1) for an electric motor of an electric vehicle, the stator (1) comprising:
- an annular stator core (2) comprising an inner circumferential surface (3), wherein a plurality of circumferentially distributed slots (4) are formed in said inner circumferential surface (3);
- a hairpin winding arrangement (5), the hairpin winding arrangement (5) comprising a plurality of hollow hairpin conductors (6), each hollow hairpin conductor (6) extending from a first portion (6a) to a second portion (6b) thereof, each first portion (6a) comprising an inlet (6i) and each second portion (6b) comprising an outlet (6o), each slot (4) accommodates portions of a plurality of hollow hairpin conductors (6), the plurality of slots (4) comprising fluid inlet slots (4a) and fluid outlet slots (4b), wherein the fluid inlet slots (4a) accommodates a plurality of first portions (6a) and the fluid outlet slots (4b) accommodates a plurality of second portions (6b) such that each hairpin (6) is accommodated by two slots (4a, 4b);
wherein each inlet (6i) of each hollow hairpin conductor (6) is arranged to receive cooling medium from a cooling device (20), thereby allowing the cooling medium to circulate inside each hollow conductor (6) from said inlet (6i) to said outlet (6o) thereof.

2. The stator (1) according to claim 1, wherein the annular stator core (2) comprise a first and a second opposing base surface (2a, 2b), wherein each inlet (6i) and outlet (6o) protrudes out of, or is accessible from, a common base surface (2a) of the first and the second base surface (2a, 2b).

3. The stator according to claim 2, wherein the stator (1) comprises a separation structure (10) attached to said stator (1), wherein the separation structure (10) comprises a barrier (11) isolating the inlets (6i) from the outlets (6o) within the separation structure (10).

4. The stator (1) according to claim 3, wherein said barrier (11) of the separation structure (10) is a meandering barrier, the meandering barrier dividing an inner space (12) enclosed by the separation structure (10) into an inlet chamber (12a) and an outlet chamber (12b), the inlet chamber (12a) comprising a cooling medium receiving opening (13) arranged to receive cooling medium from said cooling device (20), preferably the outlet chamber (12b) comprises a cooling outlet opening (14) arranged to output cooling medium.

5. The stator (1) according to any one of claims 3 or 4, wherein the barrier comprises a first and an opposing second barrier surface (12c, 12d), the first surface (12c) being exposed to inlets (6i) and the second surface (12d) being exposed to outlets (6o) of said conductors (6).

6. The stator (1) according to any one of the claim 3-5, wherein the separation structure (10) comprises:
- an annular cylinder having an inner cylindrical body (10a) and an outer cylindrical body (10b) coaxially arranged with the inner cylindrical body (10a);
- at least a first cylinder base (10c) adjoining first edges (10') of said inner and outer body;
wherein said barrier is formed intermediate the inner and outer cylindrical body (10a, 10b).

7. The stator (10) according to claim 6, wherein the separation structure (10) comprises a second cylinder base (10c') adjoining second edges (10") of said inner and outer cylindrical bodies (10a, 10b), the second cylinder base (10c') being arranged to attach to said common base surface (2a) or inlets and outlets (6i, 6o) protruding out from said common base surface (2c), wherein the second cylinder base (10c') comprises hairpin openings arranged to allow cooling medium to be transferred from an inlet chamber to an outlet chamber (12a, 12b) of the separation structure (10), by means of said hairpin conductors (6).

8. The stator (1) according to any one of the claims 3-8, wherein said inlets and outlets (6i, 6o) protrude into said separation structure (10).

9. The stator (1) according to any one of the claims 3-8, wherein the separation structure (10) is integrally formed.

10. The stator (1) according to any one of the preceding claims, wherein each hairpin conductor (6) comprises a bridging portion (6c) intermediate said first portion and said second portion (6a, 6b), the bridging portion (6c) bridging the hairpin (6) between said two slots (4a, 4b).

11. The stator (1) according to any one of the preceding claims, wherein said fluid inlet slots and fluid outlet slots are periodically distributed, preferably every other slot of said circumferentially distributed slots are the fluid inlet slots such that remaining slots are fluid outlet slots.

12. A separation structure for attachment to the stator according to claim 1 or 2, wherein the separation structure (10) comprises a barrier fluidically isolating the inlets (6i) from the outlets (6o) within the separation structure (10).

13. The separation structure according to claim 12, wherein said barrier of the separation structure (10) is a meandering barrier, the meandering barrier dividing an inner space (12) enclosed by the separation structure (10) into an inlet chamber and an outlet chamber (12a, 12b), the inlet chamber comprising a cooling medium receiving opening (13) allowing for cooling medium to be injected into said inlet chamber (12a) and be transferred, by said conductors (6), to said outlet chamber (12b).

14. An electric motor (100) comprising the stator (1) according to any one of the claims 1-11 and a rotor (1') accommodated by the stator (1).

15. An electric vehicle (200) comprising the electric motor (100) of claim 14.
